# EUROPÄISCHE PATENTANMELDUNG

(11) **EP 0 685 152 A1**
(43) Veröffentlichungstag der Anmeldung: **06.12.1995**
(21) Anmeldenummer: 95108492.0
(22) Anmeldetag: 02.06.1995
(51) Int. Cl.: A01G 9/02

(54) **Pflanzgefäss**

(30) Priorität: 03.06.1994 DE 4419402
(71) Anmelder: Ostermann, Jörn-Hinrich, D-24629 Kisdorf (DE)
(72) Erfinder: Ostermann, Jörn-Hinrich, D-24629 Kisdorf (DE)
(74) Vertreter: Hansmann, Dierk, Dipl.-Ing.

(57) **Zusammenfassung**

Es ist vorgesehen, Pflanzöffnungen (3) in Wandungen (2) eines Pflanzbehälters (1) zu bilden, die vergrößerte Einsetzöffnungen (7) aufweisen. Hierzu ist jede Pflanzöffnung (3) durch Klappen (4) begrenzt, die über eine Knickkante (5) in den Innenraum verschwenkbar sind und in der Normallage über Begrenzungen (10) zur Wandungsergänzung als Rückhalteklappen gehalten werden.

## Beschreibung

Die Erfindung bezieht sich auf ein Pflanzgefäß zur Aufnahme von Erde und Pflanzen, das in den Wandungen Pflanzöffnungen aufweist und den Pflanzöffnungen Halterungen mit einem Durchtritt für Stiele/Stämme zugeordnet sind.

Pflanzgefäße dieser Art sind bekannt und dienen zur reichhaltigen Bepflanzung. Es hat sich aber gezeigt, daß die Herstellung von Pflanzöffnungen in Wandungen, die auch im wesentlichen in der Horizontalen liegen, in der Fertigung sehr aufwendig sind und auch die Bepflanzung nur bedingt bzw. nur mit Schwierigkeiten durchführbar ist. Dieses ist besonders der Fall, wenn Pflanzen mit Erdballen, wie es bei handelsüblichen Topfpflanzen der Fall ist, verwendet werden.

Eine ähnliche Anordnung zum Einsetzen einzelner Pflanztöpfe ist aus der DE 37 32 119 bekannt geworden. Hierbei werden in eine Wandung einer Blumengondel mit Aufnahmeöffenungen zugeordnete Blumentöpfe eingesetzt, die über nachträglich aufzusetzende Halteelemente an der Wandung fixiert werden. Hierzu werden die Halteelemente über einen Aufnahmeschlitz über die Pflanzenstiele geschoben.

Weiterhin ist nach der 84 07 799 U1 eine Dekorsäule zur Blumenbepflanzung bekannt geworden, wobei Mantelelemente als Zwischenböden in den Innenraum verschwenkt und festgelegt werden, um sogenannte Pflanznester zu bilden. Eine Abdeckung der Einsetzöffnung oder eine Halterung ist hierbei nicht vorgesehen.

Nach der EU 191 879 A1 und FR 2 146 516 sind Verpackungen bzw. geschlitzte Aufnahme des Wurzelballens einer Pflanze für einen Aufnahmebehälter bekannt. Hierbei wird auf einen Aufnahmebehälter ein Deckel in Form einer Schlitzscheibe aufgesetzt und es ist im wesentlichen zentrisch ein Durchtritt für einen Pflanzenstiel vorgesehen. Ein Einsetzen der Pflanzen durch den Deckel sowie eine Halterung im Sinne einer Rückhalterung gegen Herausfallen in der Gebrauchslage als Zierposition ist nicht vorgesehen.

Die Aufgabe der Erfindung ist es, bei gattungsgemäßen Pflanzgefäßen Pflanzöffnungen in den Wandungen in beliebiger Anordnung zu ermöglichen, die eine einfache Bepflanzung auch für Pflanzen mit Erdballen gewährleisten.

Die Lösung dieser Aufgabe erfolgt erfindungsgemäß dadurch, daß jede Pflanzöffnung durch eine Halterung in Form von in den Innenraum verschwenkbaren, klappenartigen Elemente zur Einstellung einer vergrößerten Einsetzöffnung begrenzt ist, wobei die Elemente als Wandungsergänzung unter Bildung einer Knickkante angeordnet und in der Normallage über Begrenzungselemente blockiert sind.

Hierdurch wird eine beliebige Anordnung der Pflanzöffnungen ermöglicht, und nach dem Einsetzen der Pflanzen mit Erdballen tritt ein Rückhalteeffekt durch die klappenartigen Elemente ein, die eine Fortsetzung der Wandung des Pflanzbehälters ermöglichen und einen Durchtritt für die Stiele bzw. Stämme freilassen.

Eine günstige Ausbildung wird dadurch geschaffen, daß die klappenartigen Elemente eine Rosette mit einem zentralen Durchtritt bilden.

Zur einfachen Ausbildung wird weiterhin vorgeschlagen, daß die Elemente aus Kunststoff gebildet sind und jeweils mit einem Wulst oder einer Rippe als Begrenzungselement durch einen Einschnitt ein Filmscharnier ausbildbar ist.

Zur Vereinfachung der Fertigung ist vorgesehen, daß die Elemente zur Bildung einer vergrößerten Einsetzöffnung durch ein in eine Wandungsöffnung einsetzbares kompaktes Element gebildet ist. Dabei wird zur Befestigung vorgeschlagen, daß die Einsetzelemente über korrespondierende Randzonen, wie Wulst/Aufnahme bzw. Wandung/Aufnahme, in der Wandung festsetzbar ist.

In der Zeichnung sind Ausführungsbeispiele der Erfindung schematisch dargestellt. Es zeigen:

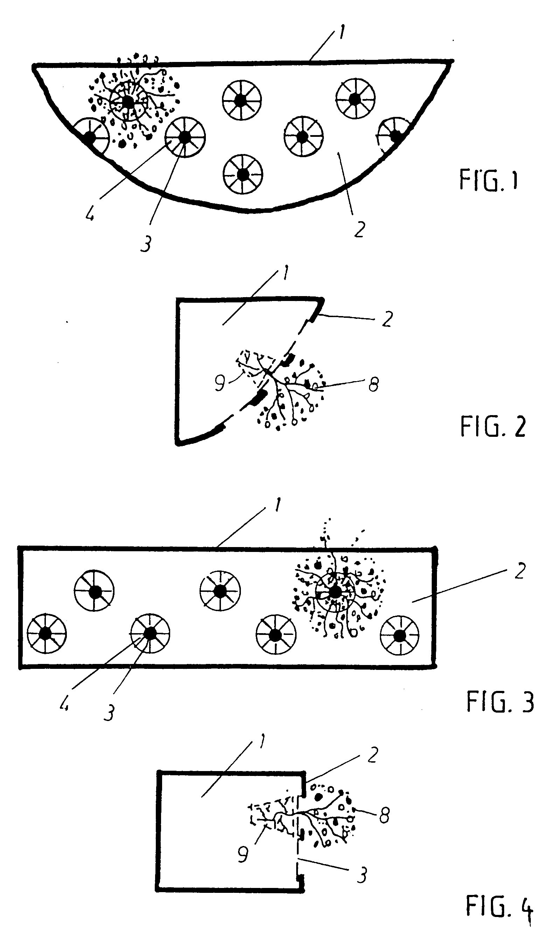

- Fig. 1: eine Vorderansicht eines Pflanzgefäßes mit Pflanzöffnungen,
- Fig. 2: einen Schnitt durch eine Anordnung gemäß Fig. 1,

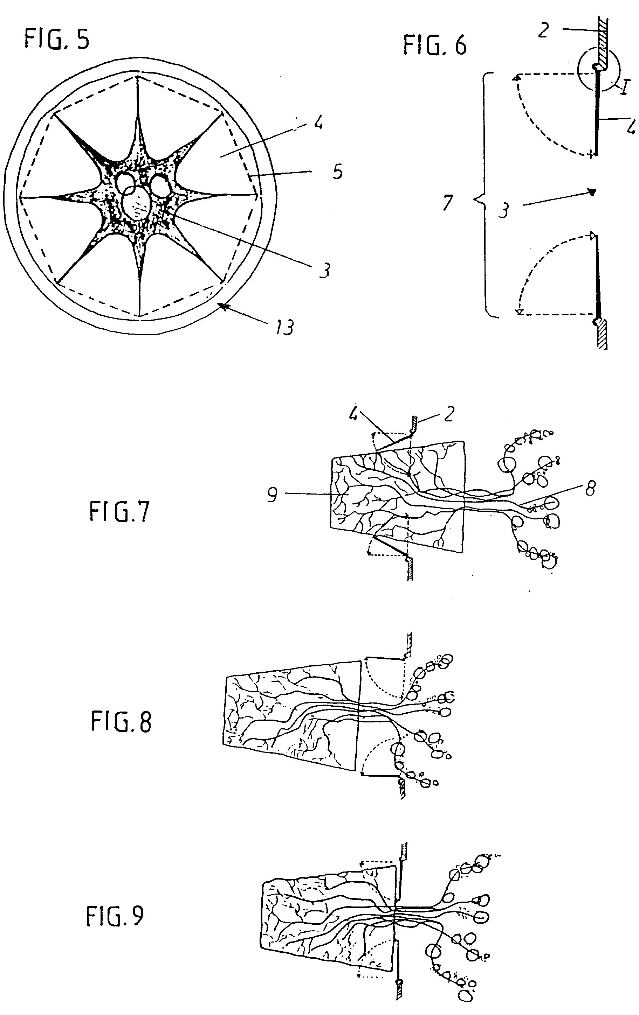

- Fig. 3 und 4: eine weitere Ausführungsform eines Pflanzbehälters in Vorderansicht und als Schnittdarstellung,
- Fig. 5: eine Draufsicht auf ein kompaktes Einsetzelement in Rosettenform,
- Fig. 6: eine Schnittdarstellung gemäß Fig. 5,
- Fig. 7 bis 9: einen Einsetzvorgang einer Bepflanzung,
- Fig. 10 und 11: zwei Verbindungen des Einsetzelementes mit der Wandung des Pflanzgefäßes als vergrößerte Einzelheit I der Fig. 6 und
- Fig. 12: eine Ausbildung einer Knickkante als Filmscharnier mit einem Steg als Begrenzungselement.

Bei den dargestellten Ausbildungen ist ein Pflanzgefäß 1 angeordnet, das in seinen Wandungen 2 Pflanzöffnungen 3 aufweist. Diese Pflanzöffnungen 3 sind durch verschwenkbare Klappen 4 begrenzt, die in diesem Fall als Rosette angeordnet sind. Die Klappen 4 sind über eine Knickkante 5 über ein Filmscharnier 6 in den Innenraum des Pflanzgefäßes 1 verschwenkbar. Hierdurch wird eine vergrößerte Einsetzöffnung 7 geschaffen, die zur Aufnahme einer Pflanze 8 mit einem Erdballen 9 dient. Nach dem Einsetzen der Pflanzen 8 werden die Klappen 4 wieder in ihre Ausgangslage in Fortsetzung der Wandung 2 gebracht und in dieser Lage über Begrenzungselemente 10 gehalten, so daß ein Rückhalteeffekt für die Pflanze 8 gebildet wird. Hierbei ist somit jede Lage der Pflanze 8 zu verwirklichen.

Die Begrenzungselemente 10 werden durch einen Wulst oder eine Rippe gebildet, die das Filmscharnier 6 aufnehmen. Dieses wird durch Einschnitte 12 gebildet, wobei die Seiten 11 als Halte- und Begrenzungsflächen dienen.

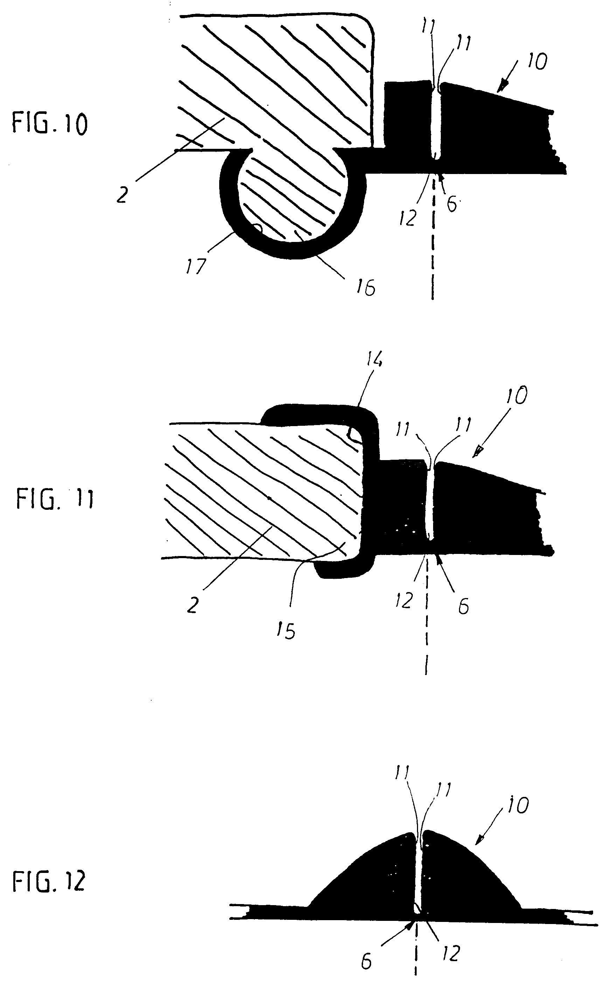

In diesem Fall sind die Klappen 4 an einem kompakten Einsetzelement 13 angeordnet, das in Öffnungen der Wandung 2 des Pflanzbehälters 1 einsetzbar ist. Hierzu greift das Einsetzelement 13 gemäß Fig. 11 mit einer korrespondierenden Aufnahme 14 über einen Rand 15 der Wandung 2. In einer weiteren Ausbildung gemäß Fig. 10 besitzt die Wandung einen entsprechenden Wulst 16, auf die eine Aufnahme 17 aufgeklippt wird.

## Patentansprüche

1. Pflanzgefäß zur Aufnahme von Erde und Pflanzen, das in den Wandungen Pflanzöffnungen aufweist und den Pflanzöffnungen Halterungen mit einem Durchtritt für Stiele/Stämme zugeordnet sind, dadurch gekennzeichnet, daß jede Pflanzöffnung (3) durch eine Halterung in Form von in den Innenraum verschwenkbaren, klappenartigen Elemente (4) zur Einstellung einer vergrößerten Einsetzöffnung (7) begrenzt ist, wobei die Elemente (4) als Wandungsergänzung unter Bildung einer Knickkante (5) angeordnet und in der Normallage über Begrenzungselemente (10) blockiert sind.

2. Pflanzgefäß nach Anspruch 1, dadurch gekennzeichnet, daß die klappenartigen Elemente (4) eine Rosette mit einem zentralen Durchtritt (3) bilden.

3. Pflanzgefäß nach Anspruch 1 oder 2, dadurch gekennzeichnet, daß die Elemente (4) aus Kunststoff gebildet sind und jeweils mit einem Wulst oder einer Rippe als Begrenzungselement (10) durch einen Einschnitt (12) ein Filmscharnier (6) ausbildbar ist.

4. Pflanzgefäß nach einem der Ansprüche 1 bis 3, dadurch gekennzeichnet, daß die Elemente (4) zur Bildung einer vergrößerten Einsetzöffnung (7) durch ein in eine Wandungsöffnung einsetzbares kompaktes Element (13) gebildet ist.

5. Pflanzgefäß nach Anspruch 4, dadurch gekennzeichnet, daß die Einsetzelemente (13) über korrespondierende Randzonen, wie Wulst/Aufnahme (16,17) bzw. Wandung/Aufnahme (14,15), in der Wandung (2) festsetzbar ist.
